# DEMANDE DE BREVET EUROPEEN

(11) **EP 2 803 433 A1**
(43) Date de publication de la demande: **19.11.2014**
(21) Numéro de dépôt: 14159687.4
(22) Date de dépôt: 14.03.2014
(51) Int. Cl.: B23B 31/00, B23B 51/08, B23B 51/10, B23D 77/00

(54) **Outil d'usinage pour l'alésage d'un trou et la réalisation d'une fraisure concentrique au trou, et procédé d'usinage associé**

(30) Priorité: 15.05.2013 FR 1301123
(71) Demandeur: Dassault Aviation, 75008 Paris (FR)
(72) Inventeur: Favereau, Stéphane, 33600 PESSAC (FR)
(74) Mandataire: Blot, Philippe Robert Emile

(57) **Abrégé**

L'outil d'usinage (12) pour l'alésage d'un trou et la réalisation d'une fraisure sensiblement concentrique au trou comprend un accessoire d'alésage (20), une fraise à chanfreiner (24) et un arbre (26) pour le montage de l'outil (12) sur un porte-outil (14), l'accessoire d'alésage (20), la fraise (24) et l'arbre (26) étant sensiblement coaxiaux les uns aux autres. L'outil (12) comprend deux pièces (40, 42) désolidarisables l'une de l'autre et un organe (44) de solidarisation réversible d'une pièce à l'autre, une première (40) desdites pièces comportant l'arbre (26) et la fraise (24), et la deuxième pièce (42) comportant l'accessoire d'alésage (20).

## Description

La présente invention concerne un outil d'usinage pour l'alésage et optionnellement le perçage d'un trou et la réalisation d'une fraisure sensiblement concentrique au trou, l'outil comprenant un accessoire d'alésage, une fraise à chanfreiner et un arbre pour le montage de l'outil sur un porte-outil, l'accessoire d'alésage, la fraise et l'arbre étant sensiblement coaxiaux les uns aux autres.

L'invention concerne également un procédé d'usinage au moyen d'un tel outil.

On connait des outils du type précité. Dans le cas d'outils destinés à l'alésage seul, l'accessoire d'alésage est constitué par un alésoir. Dans le cas d'outils destinés au perçage et à l'alésage, l'accessoire d'alésage est constitué par un foret aléseur.

Chacun de ces outils est destiné à être monté sur un porte-outil qui lui-même est monté sur une unité robotisée qui entraîne ledit outil en rotation autour de son axe. Le porte-outil est constitué de deux parties, une partie fixe solidaire du corps de l'unité robotisée et une partie mobile sur laquelle est attaché l'outil et qui est mise en mouvement de rotation et de translation par l'unité robotisée. Une fois l'outil monté sur son porte-outil et le porte-outil monté sur l'unité robotisée, l'outil est approché de la pièce à usiner, puis l'alèse uniquement ou bien la perce et l'alèse en une seule passe. A cet effet, l'outil est avancé dans la pièce à mesure que celle-ci est alésée, ou percée et alésée, par l'accessoire d'alésage, jusqu'à ce que la fraise arrive au contact de la pièce. L'outil est encore légèrement avancé dans la pièce, jusqu'à ce que la partie fixe du porte-outil vienne en contact avec la partie mobile du porte-outil, puis l'outil est retiré hors du trou.

On obtient ainsi une pièce comprenant un trou alésé et une fraisure concentrique au trou. Cette fraisure permet de réceptionner une tête de vis conique engagée dans le trou de sorte que ladite tête affleure la surface de la pièce usinée. Il est possible de régler l'avancée maximale de l'outil par rapport à l'extrémité avant du porte-outil, de façon à ajuster la profondeur de la fraisure réalisée, en réglant une butée sur la partie mobile du porte-outil.

Ces outils d'usinage permettent un gain de productivité en réalisant l'alésage et le fraisage, ainsi que, optionnellement, le perçage, en une seule passe. En outre, ils permettent une grande précision dans la qualité de l'alésage et la profondeur de la fraisure.

Les outils d'usinage de ce type connus sont généralement monoblocs. L'accessoire d'alésage, la fraise et l'arbre sont généralement réalisés en un seul et même matériau, le plus souvent de l'acier, et sont venus de matière les uns avec les autres.

Ces outils d'usinage ne donnent cependant pas entière satisfaction. En effet, l'accessoire d'alésage étant beaucoup plus sollicité que la fraise, il s'use assez rapidement, de sorte qu'il est souvent nécessaire de démonter l'outil du porte-outil pour le réaffûter. Une fois réaffûté, l'outil doit être remonté sur le porte-outil, ce qui nécessite un nouveau réglage de la profondeur de fraisage.

Un objectif de l'invention est de réduire la fréquence de réglage de la profondeur de fraisage.

A cet effet, l'invention a pour objet un outil d'usinage du type précité, caractérisé en ce qu'il comprend deux pièces désolidarisables l'une de l'autre et un organe de solidarisation réversible d'une pièce à l'autre, une première desdites pièces comportant l'arbre et la fraise, et la deuxième pièce comportant l'accessoire d'alésage.

Selon des modes de réalisation particuliers de l'invention, l'outil d'usinage présente également l'une ou plusieurs des caractéristiques suivantes, prise(s) isolément ou suivant toute(s) combinaison(s) techniquement possible(s) :
- la fraise est en un premier matériau constitutif, et l'accessoire d'alésage est en un deuxième matériau constitutif ;
- chacun desdits premier et deuxième matériaux constitutifs est de l'acier ou du carbure ;
- au moins un élément parmi la fraise et l'accessoire d'alésage est recouvert d'un matériau de revêtement ;
- la fraise est recouverte d'un matériau de revêtement plus dur que le premier matériau constitutif ;
- l'accessoire d'alésage est recouvert d'un matériau de revêtement plus dur que le deuxième matériau constitutif ;
- le ou chaque matériau de revêtement est du diamant ou du carbone amorphe;
- la première pièce présente un trou borgne de réception de la deuxième pièce, sensiblement coaxial à l'arbre et débouchant dans une extrémité de la première pièce portant la fraise, et la première pièce présente un orifice traversant pour le passage de l'organe de solidarisation, l'orifice traversant étant taraudé et débouchant dans le trou borgne et dans une face périphérique extérieure de la première pièce, l'organe de solidarisation étant une vis ;
- la deuxième pièce comprend un manchon coaxial à l'accessoire d'alésage et s'étendant dans le prolongement de l'accessoire d'alésage, pour l'engagement de la deuxième pièce dans le trou borgne, le manchon étant sensiblement cylindrique de révolution et présentant un méplat, ledit méplat étant incliné vers l'extrémité du manchon liée à l'accessoire d'alésage ;
- l'accessoire d'alésage fait saillie par rapport à la fraise lorsque la deuxième pièce est solidaire de la première pièce ; et
- l'accessoire d'alésage est un alésoir ou un foret aléseur.

L'invention a également pour objet un procédé d'usinage d'une pièce, comprenant les étapes suivantes :
- fourniture d'un outil tel que défini ci-dessus,
- montage de l'outil sur un porte-outil,
- réalisation d'un alésage dans la pièce au moyen de l'accessoire d'alésage de l'outil, et
- formation d'une fraisure sensiblement coaxiale à l'alésage au moyen de la fraise de l'outil.

Selon un mode de réalisation particulier de l'invention, le procédé comprend une étape ultérieure de démontage de l'accessoire d'alésage du porte-outil, sans démontage de la fraise.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue schématique de côté d'un ensemble comprenant un porte-outil et un outil selon l'invention monté au porte-outil, le porte-outil étant dans une configuration de rétractation de l'outil,
- la Figure 2 est une vue similaire à celle de la Figure 1, le porte-outil étant dans une configuration de déploiement de l'outil,
- la Figure 3 est une vue schématique en coupe axiale partielle de l'outil de la Figure 1,
- la Figure 4 est une vue schématique en coupe axiale partielle d'une première pièce de l'outil de la Figure 1, et
- la Figure 5 est une schématique de côté d'une deuxième pièce de l'outil de la Figure 1.

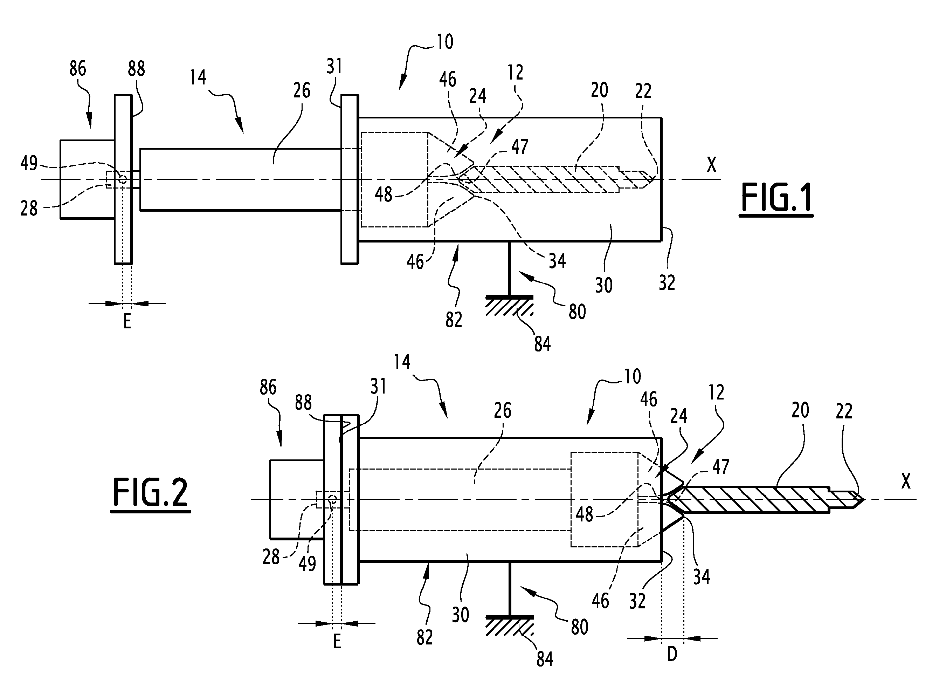

L'ensemble 10, représenté sur les Figures 1 et 2, comprend un outil d'usinage 12 et un porte-outil 14. L'outil d'usinage 12 est monté au porte-outil 14.

L'outil 12 s'étend suivant un axe X. Il comprend un accessoire d'alésage 20, définissant une extrémité avant 22 de l'outil 12, une fraise à chanfreiner 24, et un arbre 26 pour le montage de l'outil 12 sur le porte-outil 14, l'arbre 26 définissant une extrémité arrière 28 de l'outil 12. L'accessoire d'alésage 20, la fraise 22 et l'arbre 24 sont chacun sensiblement coaxial à l'axe X. L'accessoire d'alésage 20 fait saillie vers l'avant par rapport à la fraise 24, et l'arbre 26 fait saillie vers l'arrière par rapport à la fraise 24.

Le porte-outil 14 est monté sur une unité robotisée 80. Il est constitué d'une partie fixe 82, solidaire d'un bâti 84 de l'unité robotisée 80, et d'une partie mobile 86 qui est mise en mouvement de rotation et de translation par rapport à la partie fixe 82 par l'unité robotisée 80.

La partie mobile 86 comprend un organe (non représenté) d'accouplement de l'outil 12 à l'unité robotisée 80 pour l'entraînement de l'outil 12 en rotation autour de son axe X et en translation suivant l'axe X, et une butée 88 réglable pour permettre un réglage d'un écart axial E entre la butée 88 et ledit organe d'accouplement. La partie fixe 82 comprend une chemise 30 et une surface 31 d'appui contre la butée 88.

La chemise 30 définit une extrémité avant 32 du porte-outil 14. Elle est tubulaire et s'étend autour d'au moins une partie de l'outil 12 lorsqu'il est monté sur le porte-outil 14.

La partie mobile 86 est mobile en translation suivant l'axe X par rapport à la partie fixe 82 entre une première position, représentée sur la Figure 1, et une deuxième position, représentée sur la Figure 2.

Dans la première position, la butée 88 et la surface d'appui 31 sont à l'écart l'une de l'autre. L'outil 12 est rétracté dans le porte-outil 14, c'est-à-dire que l'extrémité avant 22 de l'outil 12 est en retrait vers l'arrière par rapport à l'extrémité avant 32 du porte-outil 14.

Dans la deuxième position, la butée 88 et la surface d'appui 31 sont en contact l'une contre l'autre. Au moins une partie de la fraise 24 dépasse vers l'avant d'une distance D par rapport à l'extrémité avant 32 du porte-outil 14. Cette distance D est la distance, suivant l'axe X, entre l'extrémité avant 34 de la fraise 24 et l'extrémité avant 32 de l'outil 14. On notera que la distance D est égale à K-E, où K est égal à la différence entre la distance de l'extrémité avant 34 à l'organe d'accouplement 49 d'une part et la distance de l'extrémité avant 32 à la surface d'appui 31 d'autre part.

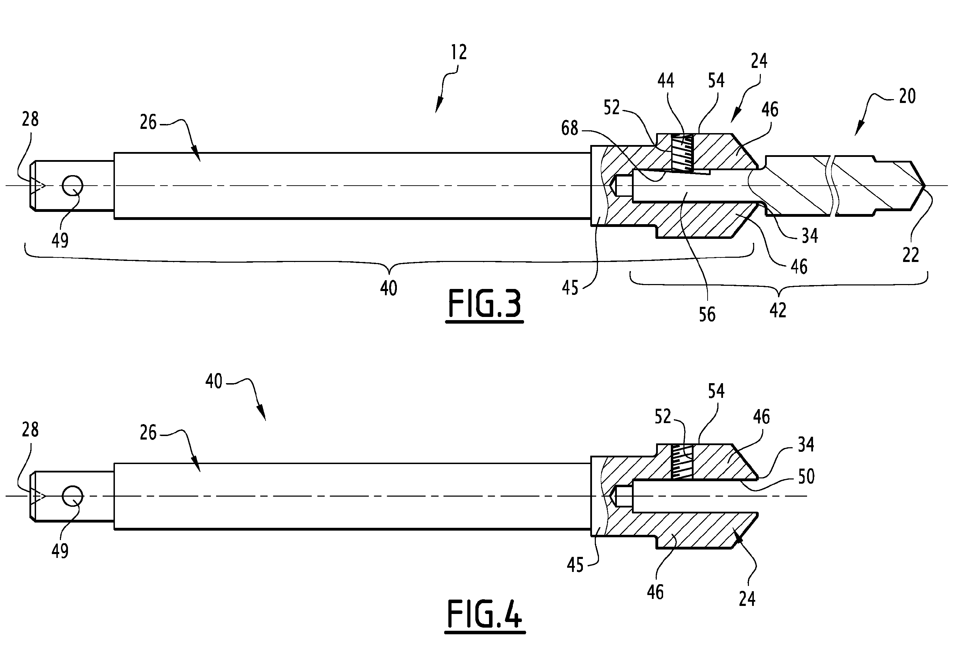

En référence à la Figure 3, l'outil 12 comprend deux pièces 40, 42 désolidarisables l'une de l'autre, et un organe 44 de solidarisation réversible des pièces 40, 42 l'une à l'autre. La première pièce 40 comprend la fraise 24 et l'arbre 26. La deuxième pièce 42 comprend l'accessoire d'alésage 20. Dans cet exemple, l'organe de solidarisation 44 est une vis.

En référence à la Figure 4, la première pièce 40 n'est pas démontable. En d'autres termes, l'arbre 26 et la fraise 24 sont liés l'un à l'autre de sorte que toute désolidarisation de l'arbre 26 et de la fraise 24 est irréversible. A cet effet, la fraise 24 est par exemple venue de matière avec l'arbre 26. En variante, l'arbre 26 est surmoulé sur la fraise 24, ou la fraise 24 est frettée sur l'arbre 26.

La fraise 24 forme un tronçon avant de la première pièce 40, et l'arbre 26 forme un tronçon arrière de la première pièce 40.

La fraise 24 comprend un corps 45 orienté suivant l'axe X et portant une pluralité de dents 46. Chaque dent 46 fait saillie radialement depuis le corps 45 vers l'extérieur de la fraise 24.

Les dents 46 sont réparties régulièrement autour de l'axe X. Elles définissent entre elles des gorges 47 (Figure 1) d'évacuation de copeaux.

Chaque dent 46 présente, à l'interface avec une gorge 47 d'évacuation de copeaux, une arête 48 (Figure 1) affûtée.

Dans l'exemple représenté, les dents 46 sont au nombre de deux, et sont diamétralement opposées l'une à l'autre.

Dans cet exemple, la fraise 24 présente une surface extérieure convergeant vers l'axe X, en partant de l'arbre 26, de sorte que l'enveloppe balayée par la fraise 24 lors de sa rotation autour de l'axe X soit tronconique.

La fraise 24 est en un premier matériau constitutif, par exemple en carbure ou en acier.

En option, chaque dent 46 de la fraise 24 est recouverte d'un premier matériau de revêtement (non représenté), par exemple du diamant micro ou nano-cristallin déposé par procédé CVD (Chemical Vapor Deposition) ou du carbone amorphe déposé par procédé PVD (Physical Vapor Deposition), ou tout autre type de revêtement présentant une résistance suffisante.

De préférence, la dureté du premier matériau de revêtement est supérieure à celle du premier matériau constitutif.

L'épaisseur du premier matériau de revêtement est de préférence inférieure à 10 µm, en particulier inférieure à 5 µm.

L'arbre 26 comprend un organe d'accouplement 49. Cet organe d'accouplement 49 est adapté pour coopérer avec la partie mobile 86 du porte-outil 14, pour le montage réversible de l'outil 12 sur le porte-outil 14, et l'entraînement de l'outil 12 en rotation autour de son axe X et en translation suivant X par l'unité robotisée.

L'arbre 26 est de préférence en acier.

La première pièce 40 présente un trou borgne 50 de réception de la deuxième pièce 42. Ce trou borgne 50 est sensiblement coaxial à l'axe X et débouche dans l'extrémité avant 34 de la fraise 24. Le trou borgne 50 est en particulier cylindrique de révolution.

La première pièce 40 présente en outre un orifice traversant 52 pour le passage de l'organe de solidarisation 44. L'orifice traversant 52 débouche dans le trou borgne 50 et dans une face périphérique extérieure 54 de la première pièce 60. Il s'étend radialement par rapport à l'axe X.

En particulier, l'orifice traversant 52 s'étend au travers d'une dent 46 de la fraise 24.

L'orifice traversant 52 est de préférence taraudé.

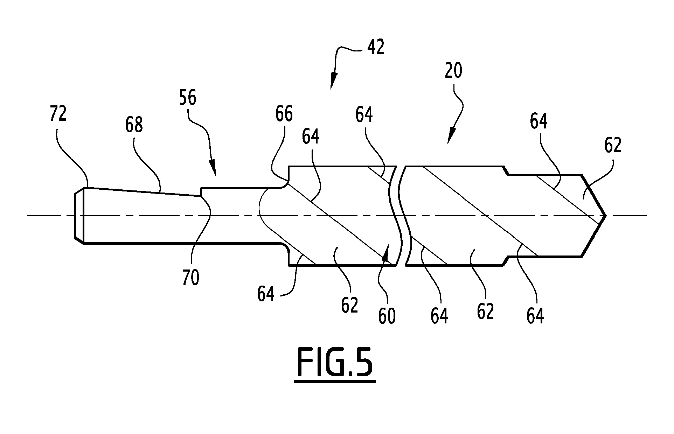

En référence à la Figure 5, la deuxième pièce 42 comprend l'accessoire d'alésage 20 et un manchon 56.

La deuxième pièce 42 n'est pas démontable. En d'autres termes, l'accessoire d'alésage 20 et le manchon 56 sont liés l'un à l'autre de sorte que toute désolidarisation de l'accessoire d'alésage 20 et du manchon 56 est irréversible. A cet effet, l'accessoire d'alésage 20 et le manchon 56 sont par exemple venus de matière l'un avec l'autre. En variante, le manchon 56 est surmoulé sur l'accessoire d'alésage 20, ou l'accessoire d'alésage 20 est fretté sur le manchon 56.

L'accessoire d'alésage 20 est, dans l'exemple représenté, un foret aléseur destiné au perçage et à l'alésage de la pièce à usiner. En variante, l'accessoire d'alésage 20 est un alésoir, destiné à l'alésage d'un trou préformé dans la pièce à usiner.

De façon classique, l'accessoire d'alésage 20 comprend un corps 60 cylindrique de révolution dans lequel sont creusées des rainures 62 dont les bords 64 sont affûtés. Dans l'exemple représenté, les rainures 62 sont hélicoïdales. En variante, les rainures 62 sont orientées parallèlement à l'axe du corps 60.

Le corps cylindrique 60 est orienté suivant l'axe X.

L'accessoire d'alésage 20 est en un deuxième matériau constitutif, par exemple en carbure ou en acier. Ce deuxième matériau constitutif est de préférence le même que le premier matériau constitutif.

En option, l'accessoire d'alésage 20 est recouvert, sur au moins les deux tiers de sa longueur, d'un deuxième matériau de revêtement. Ce deuxième matériau de revêtement est par exemple du diamant micro ou nano-cristallin déposé par procédé CVD (Chemical Vapor Deposition) ou du carbone amorphe déposé par procédé PVD (Physical Vapor Deposition), ou tout autre type de revêtement présentant une résistance suffisante. Ce deuxième matériau de revêtement est de préférence le même que le premier matériau de revêtement.

Le deuxième matériau de revêtement est en particulier plus dur que le deuxième matériau constitutif.

L'épaisseur de deuxième matériau de revêtement est de préférence inférieure à 10 µm, en particulier inférieure à 5 µm.

Le manchon 56 fait saillie vers l'arrière depuis une extrémité arrière 66 de l'accessoire d'alésage 20. Il est cylindrique et s'étend dans le prolongement de l'accessoire d'alésage 20, c'est-à-dire qu'il est orienté suivant l'axe de l'accessoire d'alésage 20.

En particulier, le manchon 56 est cylindrique de révolution.

Le manchon 56 a un diamètre inférieur à celui du trou borgne 50, et une longueur inférieure à celle du trou borgne 50. Ainsi, le manchon 56 est adapté pour être reçu dans le trou borgne 50. De préférence, le diamètre du manchon 56 et le diamètre du trou borgne 50 présentent moins de dix microns d'écart.

Dans l'exemple représenté, le diamètre du manchon 56 est également inférieur à celui de l'accessoire d'alésage 20.

Le manchon 56 présente un méplat 68. Ce méplat 68 est adapté pour coopérer avec l'organe de solidairisation 44 pour bloquer toute rotation de la deuxième pièce 42 par rapport à la première pièce 40 autour de l'axe X.

Le méplat 68 est incliné vers l'avant, c'est-à-dire vers l'extrémité du manchon 56 liée à l'accessoire d'alésage 20. En d'autres termes, l'extrémité avant 70 du méplat 68 est plus proche de l'axe X que l'extrémité arrière 72 du méplat 68. Ainsi, le méplat 68 est adapté pour coopérer avec l'organe de solidarisation 44 de façon à empêcher le retrait du manchon 56 hors du trou borgne 50.

La deuxième pièce 42 est mobile par rapport à la première pièce 40 entre une position de désolidarisation des deux pièces 40, 42, et une position de solidarisation des deux pièces 40, 42. Dans la position de désolidarisation, la deuxième pièce 42 est à l'écart de la première pièce 40, ce qui permet le remplacement de la deuxième pièce 42, ou son affûtage, indépendamment de la première pièce 40. Dans la position de solidarisation, la deuxième pièce 42 est montée sur la première pièce 40 de sorte que le manchon 56 soit engagé dans le trou borgne 50, le méplat 68 étant orienté face à l'orifice traversant 52.

Un procédé d'usinage d'une pièce (non représentée) au moyen de l'outil 12 va maintenant être décrit, en référence aux Figures 1 à 5.

Tout d'abord, l'outil 12 est fourni, les pièces 40, 42 étant solidaires l'une de l'autre. Les première et deuxième pièces 40, 42 sont en position de solidarisation, et l'organe de solidarisation 44 est vissé dans l'orifice traversant 52 de sorte à être en contact avec le méplat 68.

L'outil 12 est alors monté sur la partie mobile 86 du porte-outil 14 grâce à l'organe d'accouplement 49. A cet effet, l'outil 12 est engagé dans la chemise 30, la butée réglable 88 de la partie mobile 86 étant positionnée de façon à ajuster l'écart axial E à un écart prédéterminé.

Le porte-outil 14 est ensuite déplacé de façon à amener son extrémité avant 32 en contact avec la pièce à usiner.

Le moteur de l'unité robotisée 80 est alors activé de façon à entraîner la partie mobile 86 du porte-outil 14, et de ce fait l'outil 12, en rotation autour de son axe X.

Simultanément, la partie mobile 86 est translatée vers l'avant, de façon à avancer l'accessoire d'alésage 20 dans la pièce. Dans le cas où l'accessoire d'alésage 20 est un foret aléseur, il est avancé dans une partie pleine de la pièce, et y perce un trou. Dans le cas où l'accessoire d'alésage 20 est un alésoir, il est introduit dans un trou préformé dans ladite pièce.

L'outil 12 est avancé dans le trou à mesure que celui-ci est alésé par l'accessoire d'alésage 20, jusqu'à ce que la fraise 24 arrive au contact de la pièce. L'outil 12 est encore avancé dans le trou jusqu'à ce que la butée 88 entre en contact avec la surface d'appui 31. La partie mobile 86 revient alors dans sa première position, et l'outil 12 est retiré hors du trou.

On obtient ainsi une pièce usinée, présentant un trou alésé avec une fraisure concentrique au trou. La profondeur de la fraisure est égale à la distance D.

Lorsque l'accessoire d'alésage 20 est usé, la deuxième pièce 42 est désolidarisée de la première pièce 40. A cet effet, l'organe de solidarisation 44 est dévissé. Il suffit alors de tirer sur la deuxième pièce 42 suivant l'axe X, vers l'avant, pour séparer la deuxième pièce 42 de la première pièce 40. L'accessoire d'alésage 20 peut ainsi être affûté ou changé pendant que la première pièce 40 reste en place sur le porte-outil 14.

Une fois l'accessoire d'alésage 20 affûté, la deuxième pièce 42 est réassemblée à la première pièce 40. A cet effet, le manchon 56 est introduit dans le trou borgne 50, le méplat 68 étant orienté face à l'orifice traversant 52. L'organe de solidarisation 44 est ensuite vissé dans l'orifice traversant 52 jusqu'à venir appuyer contre le méplat 68.

L'outil 12 est alors prêt pour l'usinage de nouvelles pièces. En particulier, il n'est pas nécessaire de réajuster l'écart E puisque, la première pièce 40 n'ayant pas été démontée du porte-outil 14, la distance D n'a pas varié, et le réglage de la profondeur de fraisage est donc conservé.

Grâce à l'invention décrite ci-dessus, la fréquence de réglage de la profondeur de fraisage est réduite. En effet, cette profondeur de fraisage n'a plus à être réglée que lorsque la fraise doit être changée ou réaffûtée, et non plus à chaque fois que l'accessoire d'alésage est usé.

En outre, l'invention permet de réaliser des économies. En effet, lorsque l'accessoire d'alésage doit être remplacé, il n'est plus nécessaire de remplacer l'intégralité de l'outil, mais seulement la deuxième partie 42. Ceci réduit le coût global de l'outillage, puisque la fraise ne doit plus être remplacée à chaque remplacement de l'accessoire d'alésage.

De plus, en utilisant une fraise 24 en diamant ou recouverte de diamant, la fréquence de remplacement de la fraise, et donc de réglage de la profondeur de fraisage, est encore diminuée.

## Revendications

1. Outil d'usinage (12) pour l'alésage d'un trou et la réalisation d'une fraisure sensiblement concentrique au trou, l'outil (12) comprenant un accessoire d'alésage (20), une fraise à chanfreiner (24) et un arbre (26) pour le montage de l'outil (12) sur un porte-outil (14), l'accessoire d'alésage (20), la fraise (24) et l'arbre (26) étant sensiblement coaxiaux les uns aux autres, **caractérisé en ce que** l'outil (12) comprend deux pièces (40, 42) désolidarisables l'une de l'autre et un organe (44) de solidarisation réversible d'une pièce à l'autre, une première (40) desdites pièces comportant l'arbre (26) et la fraise (24), et la deuxième pièce (42) comportant l'accessoire d'alésage (20).

2. Outil d'usinage (12) selon la revendication 1, dans lequel la fraise (24) est en un premier matériau constitutif, et l'accessoire d'alésage (20) est en un deuxième matériau constitutif.

3. Outil d'usinage (12) selon la revendication 2, dans lequel chacun desdits premier et deuxième matériaux constitutifs est de l'acier ou du carbure.

4. Outil d'usinage (12) selon l'une quelconque des revendications précédentes, dans lequel au moins un élément parmi la fraise (24) et l'accessoire d'alésage (20) est recouvert d'un matériau de revêtement.

5. Outil d'usinage (12) selon la revendication 4, prise en combinaison avec la revendication 2 ou 3, dans lequel la fraise (24) est recouverte d'un matériau de revêtement plus dur que le premier matériau constitutif.

6. Outil d'usinage (12) selon la revendication 4 ou 5, prise en combinaison avec la revendication 2 ou 3, dans lequel l'accessoire d'alésage (20) est recouvert d'un matériau de revêtement plus dur que le deuxième matériau constitutif

7. Outil d'usinage (12) selon l'une quelconque des revendications 4 à 6, dans lequel le ou chaque matériau de revêtement est du diamant ou du carbone amorphe.

8. Outil d'usinage (12) selon l'une quelconque des revendications précédentes, dans lequel la première pièce (40) présente un trou borgne (50) de réception de la deuxième pièce (42), sensiblement coaxial à l'arbre (26) et débouchant dans une extrémité de la première pièce (40) portant la fraise (24), et la première pièce (40) présente un orifice traversant (52) pour le passage de l'organe de solidarisation (44), l'orifice traversant (52) étant taraudé et débouchant dans le trou borgne (50) et dans une face périphérique extérieure (54) de la première pièce (40), l'organe de solidarisation (44) étant une vis.

9. Outil d'usinage (12) selon la revendication 8, dans lequel la deuxième pièce (42) comprend un manchon (56) coaxial à l'accessoire d'alésage (20) et s'étendant dans le prolongement de l'accessoire d'alésage (20), pour l'engagement de la deuxième pièce (42) dans le trou borgne (50), le manchon (56) étant sensiblement cylindrique de révolution et présentant un méplat (68), ledit méplat (68) étant incliné vers l'extrémité du manchon (56) liée à l'accessoire d'alésage (20).

10. Outil d'usinage (12) selon l'une quelconque des revendications précédentes, dans lequel l'accessoire d'alésage (20) fait saillie par rapport à la fraise (24) lorsque la deuxième pièce (42) est solidaire de la première pièce (40).

11. Outil d'usinage (12) selon l'une quelconque des revendications précédentes, dans lequel l'accessoire d'alésage (20) est un alésoir ou un foret aléseur.

12. Procédé d'usinage d'une pièce, comprenant les étapes suivantes :
- fourniture d'un outil (12) selon l'une quelconque des revendications précédentes,
- montage de l'outil (12) sur un porte-outil (14),
- réalisation d'un alésage dans la pièce au moyen de l'accessoire d'alésage (20) de l'outil (12), et
- formation d'une fraisure sensiblement coaxiale à l'alésage au moyen de la fraise (24) de l'outil (12).

13. Procédé d'usinage selon la revendication 12, comprenant une étape ultérieure de démontage de l'accessoire d'alésage (20) du porte-outil (14), sans démontage de la fraise (24).
